(19) Europäisches Patentamt
European Patent Office
Office européen des brevets

(11) EP 0 856 527 A1

# (12) EUROPÄISCHE PATENTANMELDUNG

(43) Veröffentlichungstag:
**05.08.1998 Patentblatt 1998/32**

(51) Int. Cl.6: **C08F 8/00**, C08F 220/34,
G11B 7/24

(21) Anmeldenummer: **98100674.5**

(22) Anmeldetag: **16.01.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **29.01.1997 DE 19703132**
**19.02.1997 DE 19706379**

(71) Anmelder: **BAYER AG**
**51368 Leverkusen (DE)**

(72) Erfinder:
- **Berneth, Horst, Dr.**
  **51373 Leverkusen (DE)**
- **Claussen, Uwe Dr.**
  **51379 Leverkusen (DE)**
- **Kostromine, Serguei, Dr.**
  **53913 Swisttal (DE)**
- **Neigl, Ralf Dr.**
  **51373 Leverkusen (DE)**
- **Vedder, Hans-Joachim, Dr.**
  **82178 Puchheim (DE)**

## (54) Photoadressierbare Seitengruppenpolymere mit hoher induzierbarer Doppelbrechung

(57) Die Erfindung betrifft neue Seitenkettenpolymere, in denen durch Bestrahlung hohe optische Anisotropie erzeugt werden kann. Diese optische Anisotropie ist sehr thermostabil.

EP 0 856 527 A1

## Beschreibung

Die Erfindung betrifft photoadressierbare Seitengruppenpolymere, in denen sich durch Bestrahlung eine hohe Doppelbrechung induzieren läßt, so daß sie sich zur Herstellung von Bauelementen für die Speicherung optisch angebotener Information oder als optisch schaltbare Komponenten eignen.

Aus der Literatur sind verschiedene Polymere mit photochromen Gruppen bekannt; ihre besondere Eigenart ist, daß ihre optischen Eigenschalten wie Absorption, Emission, Reflexion, Doppelbrechung, Streuung lichtinduziert reversibel verändert werden können. Derartige Polymere haben eine spezielle verzweigte Struktur: An einem linearen Rückgrat sitzen - über als Abstandshalter wirkende Molekülteile verbunden - Seitengruppen, die elektromagnetische Strahlung absorbieren können. Beispiele dieser Art sind die Azobenzolgruppen enthaltenden Seitengruppenpolymeren gemäß US-PS 5 173 381.

In der letzten Zeit hat sich das Interesse der Fachwelt auf solche Seitengruppenpolymere gerichtet, die Seitengruppen unterschiedlicher Art tragen, von denen eine Art elektromagnetische Strahlung absorbieren kann, während die andere Art eine mesogene, formanisotrope Gruppe ist.

Flüssigkristalline Seitengruppenpolymere dieser Art werden z.B. in den US-PS 4 631 328 und 4 943 617 beschrieben. Filme aus diesen Polymeren sind im ungerichteten Zustand lichtstreuend und trüb, erst durch Ausrichtung werden diese Filme klar und transparent.

Aus den DE-OS 38 10 722 und 44 34 966 sind amorphe, zur optischen Informationsspeicherung geeignete Polymere bekannt. Sie besitzen den technischen Vorteil, daß Filme aus diesen Polymeren sofort nach ihrer Herstellung gebrauchsfähige optische Eigenschaften aufweisen.

Während die Gruppen, die elektromagnetische Strahlung absorbieren können, in der Regel im Wellenlängenbereich des sichtbaren Lichts absorbieren, besitzen die mesogenen Gruppen bislang bekannt gewordener Seitengruppenpolymerer ein deutlich kurzwelligeres Absorptionsmaximum, vorzugsweise bei Wellenzahlen um 33 000 $cm^{-1}$; die erreichbaren Doppelbrechungsänderungen liegen unter 0,1. Die bisher beschriebenen Verfahren zur Speicherung von Information durch Doppelbrechungsänderungen sind regelmäßig als reversibel beschrieben worden, d.h. daß mit einer durch Licht oder Wärme hervorgerufenen Temperaturerhöhung die gespeicherte Information wieder gelöscht werden kann; die Verwendung von Licht kann dabei den Vorteil der lokal begrenzten Löschbarkeit bieten, weswegen diese Variante manchmal bevorzugt ist. Die prinzipielle Löschbarkeit durch Zuführung von Energie in Form von Warme beinhaltet natürlich gleichzeitig das Risiko mangelnder Thermostabilität der eingeschriebenen Information; in der Tat ist dies ein Nachteil des bislang bekannten Standes der Technik. Die bekannten Verbindungen dieser Art besitzen also den Nachteil, daß die eingeschriebenen Doppelbrechungen nicht temperaturstabil sind; bei höheren Temperaturen, insbesondere bei Annäherung an die Glasübergangstemperatur, wird die Doppelbrechung schwächer und verschwindet schließlich ganz. Es besteht daher ein Bedarf an Informationsträgern, bei denen die Stabilität der eingeschriebenen Information möglichst temperatur<u>un</u>empfindlich ist.

Überraschenderweise wurde nun gefunden, daß überlegene Seitenkettenpolymere dann entstehen, wenn man die Seitenketten so auswählt, daß ihre Absorptionsmaxima einen definierten Abstand voneinander aufweisen. In diese neuen Polymeren läßt sich mit Licht Information einschreiben, die hoch thermostabil ist.

Gegenstand der Erfindung sind also Polymere, die an einer als Rückgrat wirkenden Hauptkette Seitenketten mindestens zweier unterschiedlicher Arten tragen, die beide elektromagnetische Strahlung, vorzugsweise mindestens für die eine Art der Wellenlänge des sichtbaren Lichts, absorbieren können mit der Maßgabe, daß die Absorptionsmaxima der unterschiedlichen Seitenketten mindestens 200, vorzugsweise mindestens 500, und maximal 10 000, vorzugsweise maximal 9000 $cm^{-1}$ voneinander entfernt sind.

Bevorzugte erfindungsgemäße Polymere tragen an einer als Rückgrat wirkenden Hauptkette davon abzweigende kovalent gebundene Seitengruppen der Formeln

$$-S^1-T^1-Q^1-A \qquad (I)$$

und

$$-S^2-T^2-Q^2-P \qquad (II),$$

worin

$S^1$, $S^2$ unabhängig voneinander Sauerstoff, Schwefel oder $NR^1$,

$R^1$ Wasserstoff oder $C_1$-$C_4$-Alkyl,

$T^1$, $T^2$ unabhängig voneinander den Rest $(CH_2)_n$, der gegebenenfalls durch -O-, $-NR^1-$ oder $-OSiR^1{}_2O-$ unterbro-

chen und/oder gegebenenfalls durch Methyl oder Ethyl substituiert sein kann,

n die Zahlen 2, 3 oder 4,

$Q^1$, $Q^2$ unabhängig voneinander einen zweibindigen Rest,

A, P unabhängig voneinander eine Einheit, die elektromagnetische Strahlung aufnehmen kann,

bedeuten mit der Maßgabe, daß die Absorptionsmaxima der Reste $-Q^1$-A und $-Q^2$-P mindestens 200, vorzugsweise mindestens 500 und maximal 10 000, vorzugsweise maximal 9000 $cm^{-1}$ voneinander entfernt sind.

Ein wesentliches Merkmal der Erfindung ist die Erkenntnis, daß die Eigenschaften der erfindungsgemäßen Polymeren umso besser sind, je ähnlicher die endständigen Gruppen $-Q^1$-A und $-Q^2$-P einander werden. Dies gilt insbesondere im Hinblick auf ihre elektronische Konfiguration. Die Übereinstimmung der Orbitalsymmetrie der beiden Gruppen soll groß, aber nicht 100 % sein. Durch die Anregung der längerwellig absorbierenden Gruppe in den ersten angeregten elektronischen ($^1S_0$)-Zustand werden die Orbitalsymmetrien der Gruppen A und P näherungsweise antisymmetrisch.

Die Funktion der Reste $T^1$ und $T^2$ besteht in der Gewährleistung eines bestimmten Abstandes der Seitengruppenenden von der als Rückgrat wirkenden Kette. Sie werden deshalb auch „Spacer" genannt.

Die Reste $Q^1$ und $Q^2$ verbinden die Endgruppen A bzw. P mit den Spacern $T^1$ bzw. $T^2$, die ihrerseits über das Verbindungsglied $S^1$ bzw. $S^2$ die Verbindung zur Hauptkette herstellen. Das besondere der Gruppen $Q^1$ und $Q^2$ ist ihr Einfluß sowohl auf A und P einerseits als auch auf $T^1$ und $T^2$ andererseits. Den Resten $Q^1$ und $Q^2$ kommt deshalb ganz besondere Bedeutung zu: So kann eine Ähnlichkeit der Konfiguration, gepaart mit einer relativ ähnlichen Lage der Absorptionsmaxima von $-Q^1$-A und $-Q^2$-P beispielsweise dadurch erreicht werden, daß identische Reste A und P durch unterschiedliche Reste $Q^1$ und $Q^2$ unterschiedlich stark polarisiert werden.

Bevorzugte Reste $Q^1$ und $Q^2$ umfassen unabhängig voneinander die Gruppen -S-, $-SO_2-$, -O-, -COO-, -OCO-, $-CONR^1-$, $-NR^1CO-$, $-NR^1-$, $(CH_2)_m$ mit m = 1 oder 2, einen zweibindigen 6-Ring mit gegebenenfalls 1 bis 2 N-Atomen (wobei dann die Anknüpfung an die Reste $T^1$ und A bzw. $T^2$ und P über diese N-Atome erfolgt) und die Gruppe $Z^1$-X-$Z^2$, worin

$Z^1$, $Z^2$ unabhängig voneinander die Gruppen -S-, $-SO_2-$, -O-, -COO-, -OCO-, $-CONR^1-$, $-NR^1CO-$, $-NR^1-$, -N=N-, -CH=CH-, -N=CH-, -CH=N- oder die Gruppe $-(CH_2)_m-$ mit m = 1 oder 2 und

X den Naphthalinrest, einen 5- oder 6-gliedrigen cycloaliphatischen, aromatischen oder heterocyclischen Ring, die Gruppe $-(CH=CH)_m-$ mit m = 1 oder 2 oder eine direkte Bindung bedeuten.

Besonders bevorzugte Reste X umfassen 2,6-Naphthylen und 1,4-Phenylen und heterocyclische Reste der Strukturen

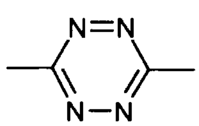 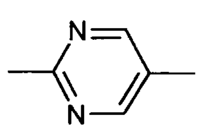 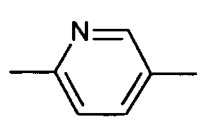 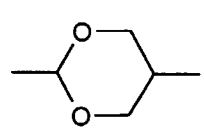

Steht X für ein 5-gliedriges Ringsystem, so kann dies carbocyclisch oder - bevorzugt - heteroaromatisch sein und bis zu 3 Heteroatome, vorzugsweise aus der Reihe S, N, O, enthalten. Geeignete Vertreter sind beispielsweise Thiophen, Thiazol, Oxazol, Triazol, Oxadiazol und Thiadiazol. Heterocyclen mit 2 Heteroatomen sind besonders bevorzugt.

Wenn X für die Gruppe $-(CH=CH)_m-$ steht, hat m vorzugsweise den Wert 1. Steht X für eine direkte Bindung, gelangt man beispielsweise zu Oxalsäure- oder Harnstoffderivaten oder zu Carbamaten (Z ausgewählt aus $Z^1$ und $Z^2$).

Die bevorzugten Bedeutungen von $Z^1$-X-$Z^2$ sind Benzoesäureamid- und Benzoesäureesterreste des Typs $-O-C_6H_4-COO-$, $-O- C_6H_4-CO-NR^1-$, $-NR^1-C_6H_4-COO-$, $-NR^1-C_6H_4-CO-NR^1-$ sowie Fumarsäureester- und -amidreste des Typs -OCO-CH=CH-OCO- und $-NR^1-CO-CH=CH-CO-NR^1-$.

Besonders bevorzugt stehen $Q^1$ für die Gruppen $-Z^1-C_6H_4-N=N-$ und $Q^2$ für die Gruppe $-Z^1-C_6H_4-CO-NH-$.

Die Gruppen $-Q^1$-A sollen Absorptionsmaxima im Wellenzahlenbereich von 15 000 bis 28 000 $cm^{-1}$ und die Gruppen $-Q^2$-P sollen Absorptionsmaxima im Wellenzahlenbereich von 16 000 bis 29 000 $cm^{-1}$ besitzen. Für die Zwecke der vorliegenden Erfindung werden A und P sowie $Q^1$ und $Q^2$ so definiert, daß die längerwellig absorbierende Einheit $-Q^1$-A, die kürzerwellig absorbierende Einheit $-Q^2$-P genannt wird.

Bevorzugte Reste A und P umfassen ein- und mehrkernige Reste, wie z.B. Zimtsäure-, Biphenyl-, Stilben- und Azofarbstoffreste, Benzoesäureanilide oder Analoga heterocyclischer Art, vorzugsweise Monoazofarbstoffreste.

Besonders bevorzugte Reste A und P entsprechen der Formel

$$-E-N=N-G \quad (III)$$

worin

G einen einbindigen aromatischen oder heterocyclischen Rest und

E einen zweibindigen aromatischen oder heterocyclischen Rest bedeuten.

Für E geeignete aromatische Reste enthalten vorzugsweise 6 bis 14 C-Atome im aromatischen Ring, der durch $C_1$-$C_{12}$-Alkyl, $C_1$-$C_{12}$-Alkoxy, Hydroxy, Halogen (insbesondere F, Cl, Br), Amino, Nitro, Trifluormethyl, Cyan, Carboxy, COOR (R = $C_1$-$C_6$-Alkyl, Cyclohexyl, Benzyl, Phenyl), $C_5$-$C_{12}$-Cycloalkyl, $C_1$-$C_{12}$-Alkylthio, $C_1$-$C_6$-Alkylsulfonyl, $C_6$-$C_{12}$-Arylsulfonyl, Aminosulfonyl, $C_1$-$C_6$-Alkylaminosulfonyl, Phenylaminosulfonyl, Aminocarbonyl, $C_1$-$C_6$-Alkylaminocarbonyl, Phenylaminocarbonyl, $C_1$-$C_4$-Alkylamino, Di-$C_1$-$C_4$-alkylamino, Phenylamino, $C_1$-$C_5$-Acylamino, $C_1$-$C_4$-Alkylsulfonylamino, Mono- oder Di- $C_1$-$C_4$-alkylaminocarbonylamino, $C_1$-$C_4$-Alkoxycarbonylamino oder Trifluormethylsulfonyl ein- oder mehrfach substituiert sein kann.

Für E geeignete heterocyclische Reste enthalten vorzugsweise 5 bis 14 Ringatome, von denen 1 bis 4 Heteroatome aus der Reihe Stickstoff, Sauerstoff Schwefel sind, wobei das heterocyclische Ringsystem durch $C_1$-$C_{12}$-Alkyl, $C_1$-$C_{12}$-Alkoxy, Hydroxy, Halogen (insbesondere F, Cl, Br), Amino, Nitro, Trifluormethyl, Cyan, Carboxy, COOR (R = $C_1$-$C_6$-Alkyl, Cyclohexyl, Benzyl, Phenyl), $C_5$-$C_{12}$-Cycloalkyl, $C_1$-$C_{12}$-Alkylthio, $C_1$-$C_6$-Alkylsulfonyl, $C_6$-$C_{12}$-Arylsulfonyl, Aminosulfonyl, $C_1$-$C_6$-Alkylaminosulfonyl, Phenylaminosulfonyl, Aminocarbonyl, $C_1$-$C_6$-Alkylaminocarbonyl, Phenylaminocarbonyl, $C_1$-$C_4$-Alkylamino, Di-$C_1$-$C_4$-alkylamino, Phenylamino, $C_1$-$C_5$-Acylamino, $C_1$-$C_4$-Alkylsulfonylamino, Mono- oder Di- $C_1$-$C_4$-alkylaminocarbonylamino, $C_1$-$C_4$-Alkoxycarbonylamino oder Trifluormethylsulfonyl ein- oder mehrfach substituiert sein kann.

Für G geeignete aromatische Reste enthalten vorzugsweise 6 bis 14 C-Atome im aromatischen Ring, der durch $C_1$-$C_{12}$-Alkyl, $C_1$-$C_{12}$-Alkoxy, Hydroxy, Halogen (insbesondere F, Cl, Br), Amino, Nitro, Trifluormethyl, Cyan, Carboxy, COOR (R = $C_1$-$C_6$-Alkyl, Cyclohexyl, Benzyl, Phenyl), $C_5$-$C_{12}$-Cycloalkyl, $C_1$-$C_{12}$-Alkylthio, $C_1$-$C_6$-Alkylsulfonyl, $C_6$-$C_{12}$-Arylsulfonyl, Aminosulfonyl, $C_1$-$C_6$-Alkylaminosulfonyl, Phenylaminosulfonyl, Aminocarbonyl, $C_1$-$C_6$-Alkylaminocarbonyl, Phenylaminocarbonyl, $C_1$-$C_4$-Alkylamino, Di-$C_1$-$C_4$-alkylamino, Phenylamino, $C_1$-$C_5$-Acylamino, $C_6$-$C_{10}$-Arylcarbonylamino, Pyridylcarbonylamino, $C_1$-$C_4$-Alkylsulfonylamino, $C_6$-$C_{12}$-Arylsulfonylaniiino, Mono- oder Di- $C_1$-$C_4$-alkylaminocarbonylamino, $C_1$-$C_4$-Alkoxycarbonylamino oder Trifluormethylsulfonyl ein- oder mehrfach substituiert sein kann.

Für G geeignete heterocyclische Reste enthalten vorzugsweise 5 bis 14 Ringatome, von denen 1 bis 4 Heteroatome aus der Reihe Stickstoff, Sauerstoff, Schwefel sind, wobei das heterocyclische Ringsystem durch $C_1$-$C_{12}$-Alkyl, $C_1$-$C_{12}$-Alkoxy, Hydroxy, Halogen (insbesondere F, Cl, Br), Amino, Nitro, Trifluormethyl, Cyan, Carboxy, COOR (R = $C_1$-$C_6$-Alkyl, Cyclohexyl, Benzyl, Phenyl), $C_5$-$C_{12}$-Cycloalkyl, $C_1$-$C_{12}$-Alkylthio, $C_1$-$C_6$-Alkylsulfonyl, $C_6$-$C_{12}$-Arylsulfonyl, Aminosulfonyl, $C_1$-$C_6$-Alkylaminosulfonyl, Phenylaminosulfonyl, Aminocarbonyl, $C_1$-$C_6$-Alkylaminocarbonyl, Phenylaminocarbonyl, $C_1$-$C_4$-Alkylamino, Di-$C_1$-$C_4$-alkylamino, Phenylamino, $C_1$-$C_5$-Acylamino, $C_1$-$C_4$-Alkylsulfonylamino, Mono- oder Di- $C_1$-$C_4$-alkylaminocarbonylamino, $C_1$-$C_4$-Alkoxycarbonylamino oder Trifluormethylsulfonyl ein- oder mehrfach substituiert sein kann.

Sofern die Reste E oder G mehrfach substituiert sind, richtet sich die Anzahl der Substituenten jeweils nach der Anzahl der möglichen Substitutionspositionen, der Möglichkeit des Einbaus der Substituenten und den Eigenschaften der substituierten Systeme. Die Aryl- und Acylreste können gegebenenfalls durch Nitro, Cyano, Halogen, $C_1$-$C_4$-Alkoxy, Amino substituiert sein.

Besonders bevorzugte Reste -E-N=N-G enthalten entweder einen aromatischen Rest und einen heterocyclischen Rest (d.h. entweder E oder G sind aromatisch, der andere Rest heterocyclisch) oder zwei aromatische Reste (d.h. sowohl E als auch G sind aromatisch).

Die bevorzugten Reste -E-N=N-G sind Azobenzolreste der Formel

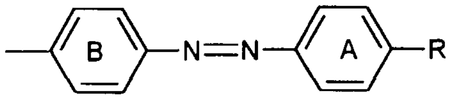

(IV)

worin

R für Nitro, Cyano, Benzamido, p-Chlor-, p-Cyano-, p-Nitrobenzamido oder Dimethylamino steht und die Ringe A und B zusätzlich substituiert sein können.

Besonders bevorzugte Reste A und P entsprechen der Formel

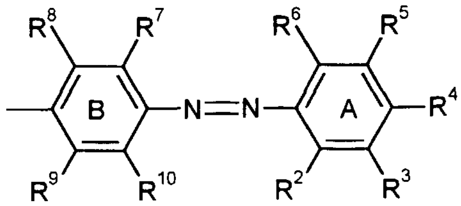

(V)

worin

$R^2$ bis $R^6$ unabhängig voneinander für Wasserstoff, Chlor, Brom, Trifluormethyl, Methoxy, $SO_2CH_3$, $SO_2CF_3$, $SO_2NH_2$, $N(CH_3)_2$, vorzugsweise Nitro, Cyano oder p-Chlor-, p-Cyano-, p-Nitrobenzamido stehen mit der Maßgabe, daß mindestens einer dieser Reste ungleich Wasserstoff ist, und

$R^7$ bis $R^{10}$ unabhängig voneinander Wasserstoff, Chlor oder Methyl bedeuten.

Bei Mehrfachsubstitution des Rings A sind die 2,4- und 3,4-Positionen bevorzugt.
Andere bevorzugte Reste A und P entsprechen der Formel

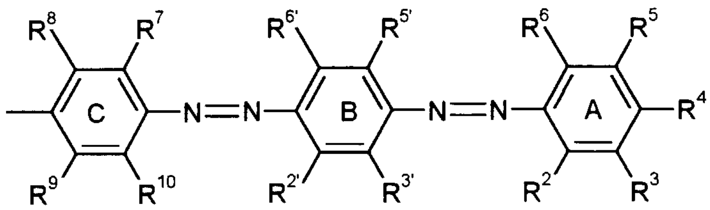

(VI)

worin

$R^2$ bis $R^6$ und $R^7$ bis $R^{10}$ die oben angegebenen Bedeutungen besitzen und

$R^{2'}$ bis $R^{6'}$ die Bedeutungen von $R^2$ bis $R^6$ - aber unabhängig von diesen - besitzen.

Andere bevorzugte Reste A bzw. P entsprechen der Formel

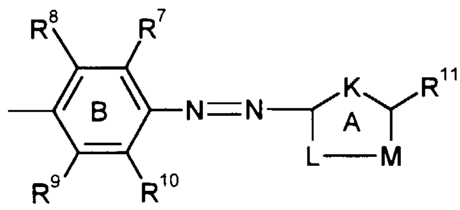

(VII)

worin

K, L, M unabhängig voneinander die Atome N, S, O oder gegebenenfalls $-CH_2-$ oder -CH= bedeuten mit der Maßgabe, daß mindestens eines der Glieder K, L, M ein Heteroatom ist und der Ring A gesättigt ist oder 1 oder 2 Doppelbindungen enthält, und

$R^7$ bis $R^{11}$ unabhängig voneinander die oben für $R^7$ bis $R^{10}$ angegebenen Bedeutungen besitzen.

Der Ring A steht vorzugsweise für einen Thiophen-, Thiazol-, Oxazol-, Triazol-, Oxadiazol- oder Thiadiazolrest. Bevorzugte Reste $-Q^1$-A und $-Q^2$-P entsprechen den Formeln

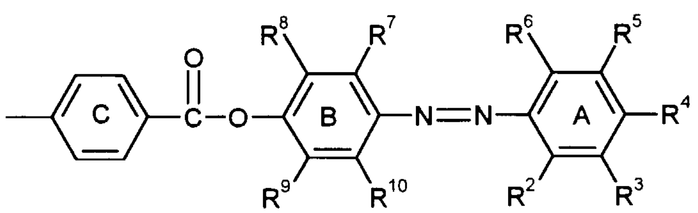

(VIII)

oder

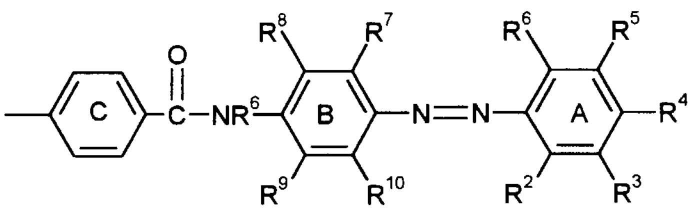

(IX)

worin

$R^1$ bis $R^{10}$ die oben angegebenen Bedeutungen besitzen.

Bevorzugte Gruppen A und P entsprechen den Formeln

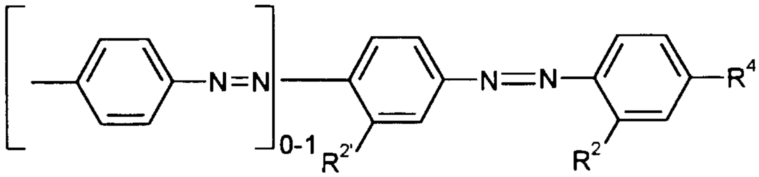

(X)

und

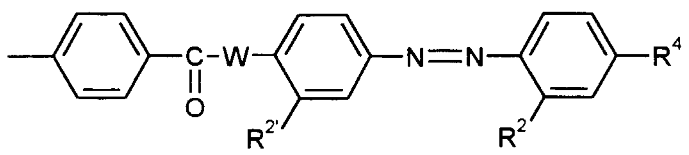

(XI)

worin

$R^2$ Wasserstoff oder Cyano,

$R^{2'}$ Wasserstoff oder Methyl,

W Sauerstoff oder $NR^1$ und

$R^4$ Nitro, Cyano, Benzamido, p-Chlor-, p-Cyano-, p-Nitrobenzamido oder Dimethylamino bedeuten.

Den obigen Formeln gemeinsam ist, daß Substitutionen in 4-, 2,4- und 3,4-Position des Ringes A besonders bevorzugt sind.

Für diese bevorzugten Gruppen A und P bevorzugte Gruppen $-S^1-T^1-Q^1-$ bzw. $-S^2-T^2-Q^2-$ entsprechen den Formel $-OCH_2CH_2O-$, $-OCH_2CH_2OCH_2CH_2O-$ und $-OCH_2CH_2-NR^1-$.

Die bevorzugten erfindungsgemäßen Polymeren enthalten allein wiederkehrende Einheiten mit den Seitengruppen I und II, und zwar vorzugsweise solche der Formeln

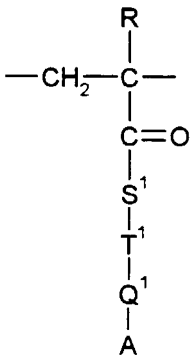

und

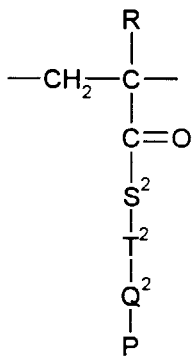

(XII) (XIII)

mit R = H oder - vorzugsweise - Methyl.

Die entsprechenden bevorzugten Monomeren zur Einführung der Seitengruppen I und II entsprechen also den Formeln

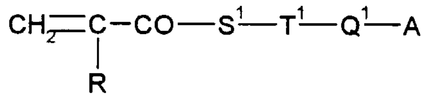

(XIV) und

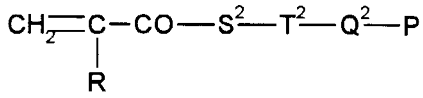

(XV).

Die Seitengruppen (I) und (II) sind also vorzugsweise an (Meth-)Acryloylgruppen $CH_2=C(R)-CO-$ mit R = Wasserstoff oder Methyl angebunden.

Vorzugsweise wird die Hauptkette der Seitengruppenpolymeren von Monomeren, die die Seitengruppen (I) tragen, von Monomeren, die die Seitengruppe (II) tragen und gegebenenfalls weiteren Monomeren gebildet, wobei insbesondere der Anteil der Monomeren, die die Seitengruppe (I) aufweisen, 10 bis 95 Mol-%, vorzugsweise 20 bis 70 Mol-%, der Anteil der Monomeren, die die Seitengruppe (II) aufweisen, 5 bis 90 Mol-%, vorzugsweise 30 bis 80 Mol-%, und der Anteil der weiteren Monomeren 0 bis 50 Mol-% betragen, jeweils bezogen auf die Summe sämtlicher eingebauter Monomereinheiten.

Als „weitere" wiederkehrende Einheiten kommen alle Bausteine in Betracht, die sich chemisch in das Seitengruppenpolymer einbauen lassen. Sie dienen im wesentlichen lediglich dazu, die Konzentration der Seitengruppen I und II im Polymer zu verringern und bewirken also quasi einen „Verdünnungs"effekt. Im Falle von Poly(meth)acrylaten umfassen die „weiteren" Monomeren ethylenisch ungesättigte copolymerisierbare Monomere, die bevorzugt $\alpha$-substituierte Vinylgruppen oder $\beta$-substituierte Allylgruppen tragen, bevorzugt Styrol; aber auch beispielsweise kernchlorierte und -alkylierte bzw. -alkenylierte Styrole, wobei die Alkylgruppen 1 bis 4 Kohlenstoffatome und die Alkenylgruppen 2 bis 4 Kohlenstoffatome enthalten können, wie z.B. Vinyltoluol, Divinylbenzol, $\alpha$-Methylstyrol, tert.-Butylstyrole, Chlorstyrole; Vinylester von Carbonsäuren mit 2 bis 6 Kohlenstoffatomen, bevorzugt Vinylacetat; Vinylpyridin, Vinylnaphthalin, Vinylcyclohexan, Acrylsäure und Methacrylsäure und/oder ihre Ester (vorzugsweise Vinyl-, Allyl- und Methallylester) mit 1 bis 4 Kohlenstoffatomen in der Alkoholkomponente, ihre Amide und Nitrile, Maleinsäureanhydrid, -halb- und -diester mit 1 bis 4 Kohlenstoffatomen in der Alkoholkomponente, -halb- und -diamide und cyclische Imide wie N-Methylmaleinimid oder N-Cyclohexylmaleinimid; Allylverbindungen wie Allylbenzol und Allylester, wie Allylacetat, Phthalsäurediallylester, Isophthalsäurediallylester, Fumarsäurediallylester, Allylcarbonate, Diallylcarbonate, Triallylphosphat und Triallylcyanurat.

Bevorzugte „weitere" Monomere entsprechen der Formel

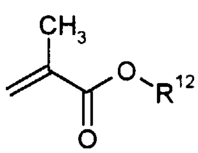

(XVI)

worin

$R^{12}$ für einen gegebenenfalls verzweigten $C_1$-$C_6$-Alkylrest oder einen wenigstens einen weiteren Acrylrest enthaltenden Rest steht.

Die erfindungsgemäßen Polymeren können auch mehr als eine Seitengruppe, die unter die Definition von (I) fallt, oder mehr als eine Seitengruppe, die unter die Definition von (II) fällt, oder mehrere Seitengruppen sowohl der Definition von (I) als auch von (II) enthalten.

Die erfindungsgemäßen Polymeren besitzen vorzugsweise Glasübergangstemperaturen Tg von mindestens 40°C. Die Glasübergangstemperatur kann beispielsweise nach B. Vollmer, Grundriß der Makromolekularen Chemie, S. 406 bis 410, Springer-Verlag, Heidelberg 1962, bestimmt werden.

Die erfindungsgemäßen Polymeren besitzen im allgemeinen ein als Gewichtsmittel bestimmtes Molekulargewicht

von 5 000 bis 2 000 000, vorzugsweise 8 000 bis 1 500 000, bestimmt durch Gelpermeationschromatographie (geeicht mit Polystyrol).

Die Strukturelemente mit hoher Formanisotropie und hoher Anisotropie der molekularen Polarisierbarkeit sind die Voraussetzung für hohe Werte der optischen Anisotropie. Durch die Struktur der Polymeren werden die zwischenmolekularen Wechselwirkungen der Strukturelemerte (I) und (II) so eingestellt, daß die Ausbildung flüssigkristalliner Ordnungszustände unterdrückt wird und optisch isotrope, transparente nichtstreuende Filme hergestellt werden können. Andererseits sind die zwischenmolekularen Wechselwirkungen dennoch stark genug, daß bei Bestrahlung mit polarisiertem Licht ein photochemisch induzierter, kooperativer, gerichteter Umorientietungsprozeß der Seitengnippen bewirkt wird.

In die optisch isotropen, amorphen erfindungsgemäßen Polymeren lassen sich durch Bestrahlung mit polarisiertem Licht extrem hohe Werte der optischen Anisotropie induzieren. Die gemessenen Werte der Doppelbrechungsanderung $\Delta n$ liegen zwischen 0,05 und 0,8.

Als Licht wird vorzugsweise linear polarisiertes Licht verwendet, dessen Wellenlänge im Bereich der Absorptionsbande der Seitengruppen liegt.

Weiterer Gegenstand der Erfindung sind Polymere, in die mit polarisiertem Licht Doppelbrechungsänderungen $\Delta n$ von über 0,15, vorzugsweise über 0,2, insbesondere über 0,4 eingeschrieben werden können. Die Bestimmung des Wertes $\Delta n$ soll dabei, wie nachfolgend beschrieben, erfolgen:

Zunächst bestimmt man an den beiden Homopolymerisaten jeweils das Absorptionsmaximum $\lambda_{max1}$ bzw. $\lambda_{max2}$. Durch Bestrahlen eines Films des zu testenden Copolymerisats mit linear polarisiertem Licht einer Wellenlänge von $(\lambda_{max1}+\lambda_{max2})$:2 erzeugt man eine Doppelbrechungsänderung. Dazu werden die Proben in Richtung der Flächennormalen mit polarisiertem Licht bestrahlt. Die Leistung der Lichtquelle soll 1 000 mW/cm$^2$ betragen; für den Fall, daß das Copolymerisat unter diesen Bedingungen zerstört wird, setzt man die Leistung der Lichtquelle in 100 mW-Stufen solange herab, bis das Copolymerisat durch die Bestrahlung nicht mehr zerstört wird. Die Bestrahlung wird fortgeführt, bis sich die Doppelbrechung nicht mehr ändert. Die Messung der erzeugten Doppelbrechungsänderung erfolgt mit einer Auslesewellenlänge von $[((\lambda_{max1}+\lambda_{max2}):2] + 350 \pm 50$[nm]. Die Polarisation des Meßlichts soll einen Winkel von 45°, relativ zur Polarisationsrichtung des einschreibenden Lichts, bilden.

Die Herstellung der Seitengruppenmonomeren und ihre Polymerisation können nach literaturbekannten Verfahren durchgeführt werden; vgl. beispielsweise Makromolekulare Chemie 187, 1327-1334 (1984), SU 887 574, Europ. Polym. 18, 561 (1982) und Liq. Cryst. 2, 195 (1987), DD 276 297, DE-OS 28 31 909 und 38 08 430. Die erfindungsgemäßen Polymeren werden im allgemeinen durch radikalische Copolymerisation der Monomeren in geeigneten Lösungsmitteln, wie z.B. aromatischen Kohlenwasserstoffen wie Toluol oder Xylol, aromatischen Halogenkohlenwasserstoffen wie Chlorbenzol, Ethern wie Tetrahydrofuran oder Dioxan, Ketonen wie Aceton oder Cyclohexanon, und/oder Dimethylformamid in Gegenwart radikalliefernder Polymerisationsinitiatoren, wie z.B. Azobis(isobutyronitril) oder Benzoylperoxid, bei erhöhten Temperaturen, in der Regel bei 30 bis 130°C, vorzugsweise bei 40 bis 70°C, möglichst unter Wasser- und Luftausschluß hergestellt. Die Isolierung kann durch Ausfällen mit geeigneten Mitteln, z.B. Methanol erfolgen. Die Produkte können durch Umfällen, z.B. mit Chloroform/Methanol gereinigt werden.

Weiterer Gegenstand der Erfindung ist also ein Verfahren zur Herstellung der Seitengruppenpolymeren durch Copolymerisation der entsprechenden Monomeren.

Die Herstellung isotroper Filme gelingt, ohne daß aufwendige Orientierungsverfahren unter Nutzung externer Felder und/oder von Oberflächeneffekten notwendig sind. Sie lassen sich durch Spincoating, Tauchen, Gießen oder andere technologisch leicht beherrschbare Beschichtungsverfahren auf Unterlagen aufbringen, durch Pressen oder Einfließen zwischen zwei transparente Platten bringen oder einfach als selbsttragende Filme durch Gießen oder Extrudieren herstellen. Solche Filme lassen sich durch schlagartiges Abkühlen, d.h. durch eine Abkühlungsrate von > 100 K/min, oder durch rasches Abziehen des Lösungsmittels auch aus flüssig-kristallinen Polymeren herstellen, die Strukturelemente im beschriebenen Sinne enthalten.

Die Schichtdicke solcher Filme liegt vorzugsweise zwischen 0,1 µm und 100 µm, insbesonders zwischen 0,1 und 5 µm.

Ein weiterer Gegenstand der Erfindung sind also Filme (sowohl selbsttragende als auch solche in Form von Beschichtungen) aus den beschriebenen Polymeren sowie mit diesen Filmen beschichtete Träger.

Die erfindungsgemäßen Seitengruppenpolymeren sind im glasartigen Zustand der Polymeren optisch isotrop, amorph, transparent und nicht-lichtstreuend und können selbsttragende Filme bilden.

Vorzugsweise werden sie aber auf Trägermaterialien, beispielsweise Glas oder Kunststoffolien, aufgebracht. Dies kann durch verschiedene an sich bekannte Techniken geschehen, wobei das Verfahren danach ausgewählt wird, ob eine dicke oder dünne Schicht gewünscht wird. Dünne Schichten können z.B. durch Spincoaten oder Rakeln aus Lösungen oder der Schmelze, dickere durch Füllen von vorgefertigten Zellen, Schmelzpressen oder Extrudieren erzeugt werden.

Die Polymeren lassen sich zur digitalen oder analogen Datenspeicherung im weitesten Sinne, beispielsweise zur optischen Signalverarbeitung, zur Fourier-Transformation und -Faltung oder in der kohärenten optische Korrelationstechnik, verwenden. Die laterale Auflösung wird durch die Wellenlänge des Einschreibelichts begrenzt. Sie erlaubt eine Pixelgröße von 0,45 bis 3 000 µm, bevorzugt ist eine Pixelgröße von 0,5 bis 30 µm.

Diese Eigenschaft macht die Polymeren zur Verarbeitung von Bildern und zur Informationsverarbeitung mittels Hologrammen besonders geeignet, deren Reproduktion durch Ausleuchten mit einem Referenzstrahl erfolgen kann. Analog laßt sich das Interferenzmuster zweier monochromatischer kohärenter Lichtquellen mit konstanter Phasenbeziehung speichern. Entsprechend lassen sich dreidimensionale holographische Bilder speichern. Das Auslesen erfolgt durch Beleuchtung des Hologramms mit monochromatischem, kohärentem Licht. Durch den Zusammenhang zwischen dem elektrischen Vektor des Lichts und der damit verbundenen Vorzugsrichtung im Speichermedium läßt sich eine höhere Speicherdichte als bei einem rein binären System erzeugen. Bei der analogen Speicherung können Werte der Grauskala kontinuierlich und ortsaufgelöst eingestellt werden. Das Auslesen analog gespeicherter Information geschieht im polarisierten Licht, wobei man je nach Stellung der Polarisatoren das positive oder das negative Bild hervorholen kann. Hierbei kann einerseits der durch die Phasenverschiebung von ordentlichem und außerordentlichem Strahl erzeugte Kontrast des Films zwischen zwei Polarisatoren genutzt werden, wobei die Ebenen des Polarisators vorteilhaft einen Winkel von 45° zur Polarisationsebene des Einschreiblichts bilden und die Polarisationsebene des Analysators entweder senkrecht oder parallel zu der des Polarisators steht. Eine andere Möglichkeit besteht in der Detektion des durch induzierte Doppelbrechung verursachten Ablenkwinkels des Leselichts.

Die Polymeren lassen sich als optische Komponenten verwenden, die passiv sein oder aktiv schaltbar sein können, insbesondere für holografische Optiken. So kann die hohe lichtinduzierte optische Anisotropie zur elektrischen Modulierung der Intensität und/oder des Polarisationszustandes von Licht genutzt werden. Entsprechend kann man aus einem Polymerfilm durch holografische Strukturierung Komponenten herstellen, die Abbildungseigenschaften haben, die mit Linsen oder Gittern vergleichbar sind.

Weiterer Gegenstand der Erfindung ist also die Verwendung der beschriebenen Polymeren für optische Bauelemente.

Die Prozentangaben in den nachfolgenden Beispielen beziehen sich - falls nicht anders angegeben - jeweils auf das Gewicht.

**Beispiele**

**Beispiel 1** Herstellung der Polymerisate

1.1 Herstellung der Monomeren

1.1.1 aus Methacrylchlorid

100 g N-Methyl-N-(2-hydroxyethyl)-anilin werden in 100 ml Chloroform gelöst. Man gibt bei 40°C unter Rühren tropfenweise 182,6 g Triethylamin und 137,2 g Methacrylchlorid langsam hinzu und rührt bei 40°C über Nacht. Danach versetzt man die Reaktionslösung mit 500 ml Chloroform und schüttelt 5 mal mit je 200 ml Wasser aus. Die organische Phase wird über wasserfreiem Magnesiumsulfat getrocknet, mit Kupfer(I)chlorid versetzt und nach Abdestillieren des Lösungsmittels im Hochvakuum destilliert. Der Methacrylester des Hydroxyethylanilins geht bei 127-130°C/55 mbar als wasserklare Flüssigkeit über. Die Ausbeute beträgt 49,5 g.

1.1.2 aus Methacrylsäure

In eine Lösung aus 100 ml N-Methyl-N-(2-hydroxyethyl)-anilin, 265 ml Methacrylsäure und 26,5 g Hydrochinon in 398 ml Chloroform werden bei Raumtemperatur unter Rühren 50 ml konz. Schwefelsäure getropft. Nach dem Stehen über Nacht wird aufgeheizt und das Reaktionswasser azeotrop entfernt. Nach dem Abkühlen wird mit konzentrierter wäßriger Sodalösung ein pH von 7 bis 8 eingestellt, und das Produkt wird aus dieser Lösung durch Ausschütteln mit Ether extrahiert. Man verfährt wie oben angegeben weiter und erhält eine Ausbeute von 56 g.

1.1.3 Monomer mit der Endgruppe -A

7,15 g 2,4-Dicyanoanilin werden bei 0 bis 5°C in einer Lösung aus 100 ml Eisessig, 20 ml Phosphorsäure und 7,5 ml Schwefelsäure mit 24 g Nitrosylschwefelsäure diazotiert und 1 h nachgerührt. Man gibt die Reaktionsmischung zu einer Lösung von 15,3 g N-Methyl-N-(2-methacryloyloxyethyl)-anilin und 1,5 g Harnstoff in 60 ml Eisessig, wobei die Temperatur auf 10°C gehalten wird. Nach kurzem Nachrühren wird die Reaktionsmischung mit Soda auf einen pH-Wert von 3 gestellt, der Niederschlag abgesaugt, mit Wasser gewaschen und getrocknet. Man erhält 14,4 g eines roten Feststoffs, der ohne weitere Reinigung weiter verwendet wird.

1.1.4 Monomer mit der Endgruppe -P

Zu einer Lösung von 33 g 4-(2-Methacryloyloxy)-ethoxy-benzoesäurechlorid in 100 ml Dioxan werden 27,6 g 4-Amino-2',4'-dicyano-azobenzol in 500 ml Dioxan gegeben, 2 h gerührt und das Produkt durch Eingießen der Lösung in 2 l Wasser gefällt. Der Niederschlag wird abgesaugt, getrocknet und durch zweimaliges Umkristallisieren aus Dioxan gereinigt. Die Ausbeute beträgt 30,4 g an orangeroten Kristallen mit einem Fp. von 215- 217°C.

1.2 Herstellung des Copolymerisats

2,7 g Monomer 1.1.3 und 5,19 g Monomer 1.1.4 werden in 75 ml DMF unter Argon als Schutzgas mit 0,39 g Azobis(isobutyronitril) als Polymerisationsinitiator bei 70°C zur Polymerisation gebracht. Nach 24 h wird filtriert, das DMF abdestilliert, der Rückstand zur Entfernung nicht umgesetzter Monomerer mit Methanol ausgekocht und bei 120°C im Hochvakuum getrocknet. Man erhält 7,18 g eines amorphen Copolymerisats mit einer Glasübergangstemperatur von 144°C, dessen optische Eigenschaften in Beispiel 3.5 angegeben sind.
Zur Herstellung weiterer Copolymerisate verfährt man analog.

<u>**Beispiel 2**</u> Variation des Abstands der Absorptionsmaxima

Herstellung der Meßproben: 2 x 2 cm große Glasplättchen der Dicke 1.1 mm werden in einem Spincoater (Bauart Süss RC 5) placiert und mit 0,2 ml einer Lösung von 150 g der nachfolgend angegebenen Polymerisate in 1 l absolutem Tetrahydrofuran bei 2000 U/min in 10 sec beschichtet. Die Schicht ist 0,9 μm dick, transparent und amorph. Zwischen gekreuzten Polarisatoren erscheint die Fläche bei Tageslicht gleichmäßig dunkel. Anzeichen für polarisierende Bereiche werden nicht beobachtet.

Die Meßplättchen werden mit einem Ar-Ionen Laser mit einer Leistung von 250 $mW/cm^2$ bei einer Wellenlänge von 514 nm belichtet, wobei sich eine Doppelbrechung aufbaut. Die maximal erreichbare Doppelbrechung $\Delta n$ in der Polymerschicht wird in zwei Schritten bestimmt:

Zuerst wird der maximale induzierbare Gangunterschied $\Delta\lambda$, der zwischen gekreuzten Polarisatoren eine Aufhellung erzeugt, durch eine Messung mit einem Ehringhaus-Kompensator bestimmt. Die quantitative Bestimmung erfolgt durch die Kompensation der Aufhellung. Dies geschieht durch Drehung eines in den Strahlengang gebrachten Quarzkristalls, der die optische Weglänge und damit den Gangunterschied ändert. Man ermittelt nun den Gangunterschied, bei dem die Aufhellung vollständig kompensiert wird. Die Messung muß mit Licht einer Wellenlänge vorgenommen werden, die außerhalb des Absorptionsbereichs der Verbindungen liegt, um Resonanzeffekte zu vermeiden. In der Regel genügt ein He-Ne-Laser der Emissionswellenlänge 633 nm, bei langwelligen Absorptionen wird mit Licht eines Diodenlasers der Wellenlänge 820 nm gemessen. Die verwendete Auslesewellenlänge ist in den folgenden Tabellen unter der Spaltenüberschrift „λ„ angegeben.

In einem zweiten Schritt wird die Schichtdicke des Polymers mit einem mechanisch wirkenden Schichtdickenmeßgerät (Alphastep 200; Hersteller: Tencor Instruments) gemessen.

Die Doppelbrechungsänderung $\Delta n$ wird aus dem Quotienten des Gangunterschieds $\Delta\lambda$ und der Schichtdicke d bestimmt:

$$\Delta n = \frac{\Delta\lambda}{d}$$

Die Bestimmung der Absorptionsmaxima geschieht durch Auswerten der UV/Vis-Absorptionsspektren. Bei extremen Mischungen kann es vorkommen, daß nur noch ein Peak auswertbar ist. In solchen Fällen muß man den nicht ablesbaren Wert mit dem aus dem entsprechenden 1:1-Copolymerisat substituieren.

Zur Herstellung der Verbindungen und Messung der Daten verfährt man in den folgenden Beispielen analog.

Man erhält für den Fall $T^1=T^2$; $Q^1 \neq Q^2$, $A \neq P$:

m Mol-%

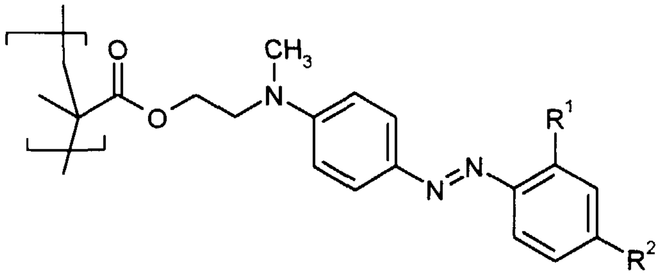

n Mol-%

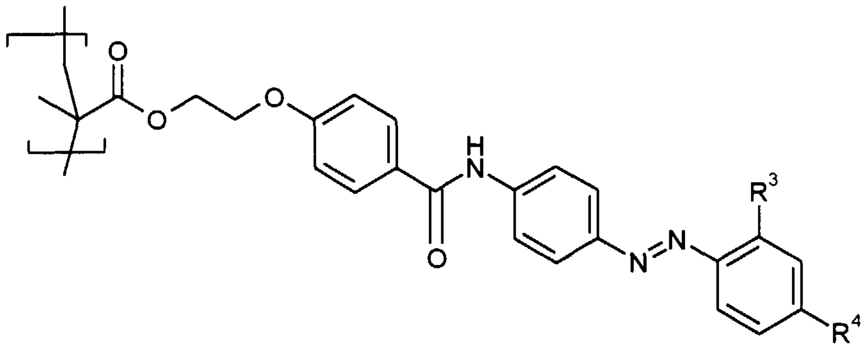

Formel 2

| Beispiel | $\nu_A$ | $\nu_P$ | $\Delta\nu_{P-A}$ | $\Delta n$ | m | n | $mW/cm^2$ | $\lambda$[nm] |
|---|---|---|---|---|---|---|---|---|
| $R^1$=H; $R^2$=CN; $R^3$=CN; $R^4$=CN | | | | | | | | |
| 2.1 | 22 900 | 25 300 | 2 600 | 0,110 | 70 | 30 | 250 | 820 |
| $R^1$=CN; $R^2$=CN; $R^3$=H; $R^4$=CN | | | | | | | | |
| 2.2 | 20 300 | 27 100 | 6 800 | 0,183 | 60 | 40 | 60 | 633 |
| 2.3 | 20 400 | 26 700 | 6 300 | 0,136 | 40 | 60 | 60 | 633 |
| $R^1$=H; $R^2$=$NO_2$;$R^3$=H; $R^4$=CN | | | | | | | | |
| 2.4 | 21 400 | 27 000 | 5 600 | 0,176 | 40 | 60 | 60 | 633 |
| $R^1$=$NO_2$; $R^2$=$NO_2$; $R^3$=CN; $R^4$=CN | | | | | | | | |
| 2.5 | 19 300 | 25 600 | 6 300 | 0,190 | 70 | 30 | 250 | 820 |
| $R^1$=$NO_2$; $R^2$=$NO_2$; $R^3$=H; $R^4$= $NO_2$ | | | | | | | | |
| 2.6 | 18 000 | 26 700 | 8 700 | 0,075 | 70 | 30 | 250 | 820 |

m Mol-%

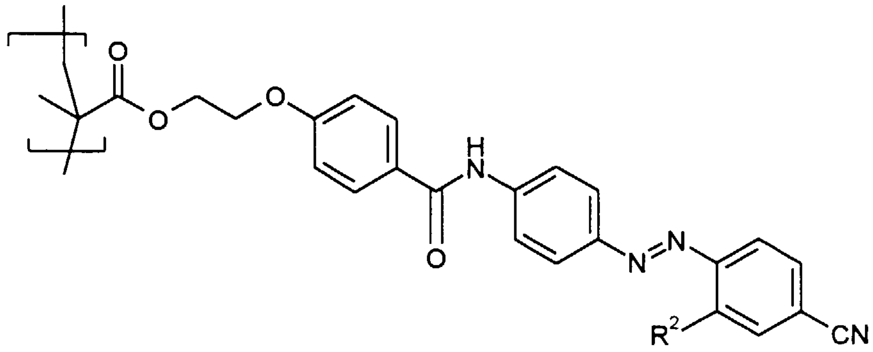

n Mol-%

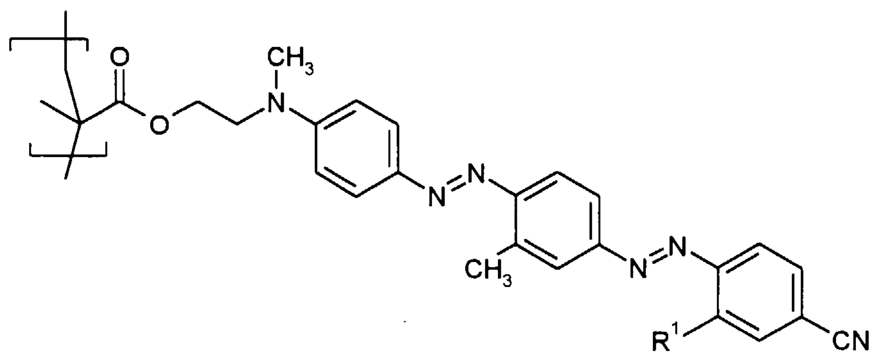

Formel 3

| Beispiel | $\nu_A$ | $\nu_P$ | $\Delta\nu_{P-A}$ | $\Delta n$ | m | n | mW/cm$^2$ | $\lambda$[nm] |
|---|---|---|---|---|---|---|---|---|
| $R^1$=$R^2$=H | | | | | | | | |
| 2.7 | 19 400 | 27 900 | 8 300 | 0,197 | 50 | 50 | 250 | 820 |
| $R^1$=H; $R^2$=CN | | | | | | | | |
| 2.8 | 20 000 | 25 400 | 5 400 | 0,287 | 70 | 30 | 250 | 820 |
| $R^1$=CN; $R^2$=CN | | | | | | | | |
| 2.9 | 19 000 | 25 900 | 6 900 | 0,295 | 60 | 40 | 250 | 820 |
| $R^1$=CN; $R^2$=H | | | | | | | | |
| 2.10 | 19 000 | 27 400 | 8 200 | 0,451 | 60 | 40 | 250 | 820 |

m Mol-%

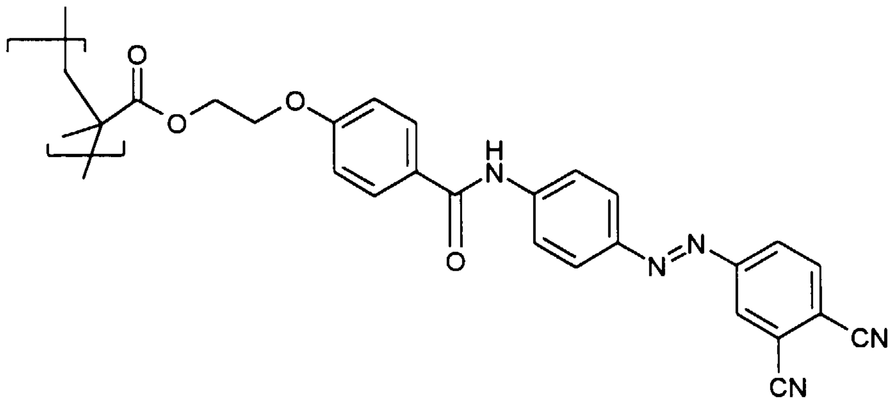

n Mol-%

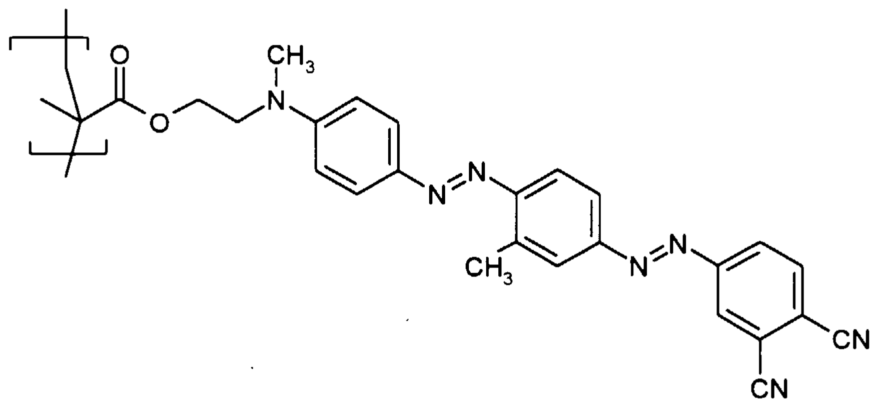

Formel 4

| Beispiel | $\nu_A$ | $\nu_P$ | $\Delta\nu_{P-A}$ | $\Delta n$ | m | n | $mW/cm^2$ | $\lambda$[nm] |
|---|---|---|---|---|---|---|---|---|
| 2.11 | 19 200 | 27 800 | 8 600 | 0,148 | 50 | 50 | 250 | 820 |

Formel 5

n Mol-%

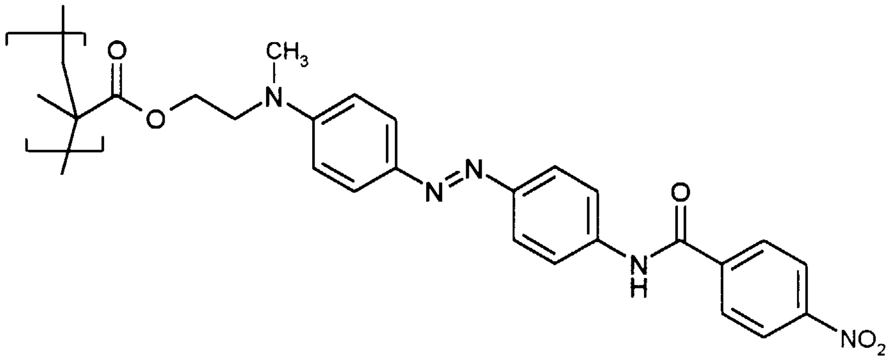

m Mol-%

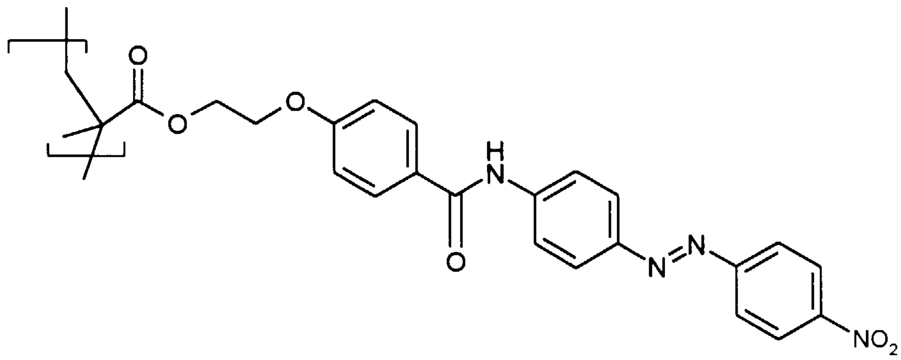

| Beispiel | $\nu_A$ | $\nu_P$ | $\Delta\nu_{P-A}$ | $\Delta n$ | m | n | mW/cm$^2$ | $\lambda$[nm] |
|---|---|---|---|---|---|---|---|---|
| 2.12 | 20 700 | 26 000 | 5 300 | 0,120 | 50 | 50 | 250 | 820 |

m Mol-%

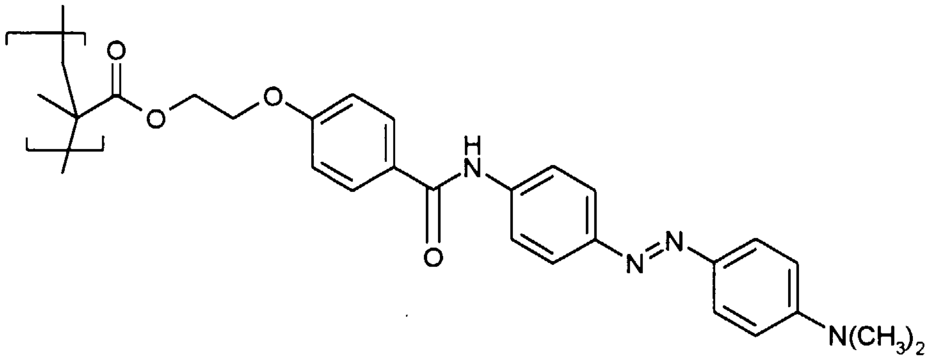

m Mol-%

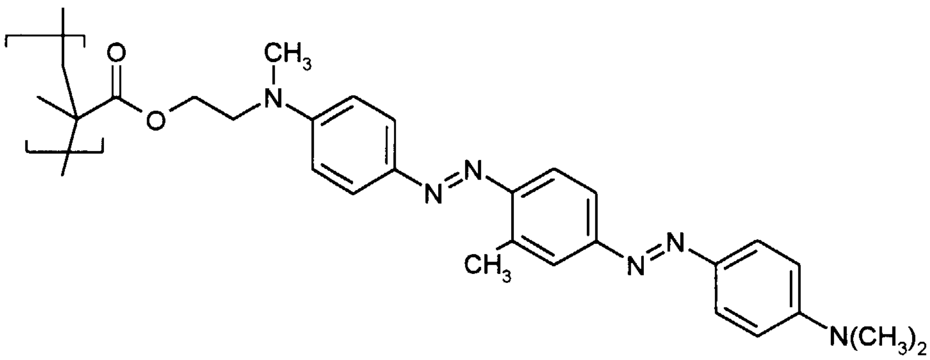

Formel 6

| Beispiel | $\nu_A$ | $\nu_P$ | $\Delta\nu_{P-A}$ | $\Delta n$ | m | n | mW/cm$^2$ | $\lambda$[nm] |
|---|---|---|---|---|---|---|---|---|
| 2.13 | 18 900 | 23 400 | 4 500 | 0,250 | 50 | 50 | 250 | 820 |

**<u>Beispiel 3</u>** $T^1=T^2;Q1 \neq Q^2$, A = P

n Mol-%

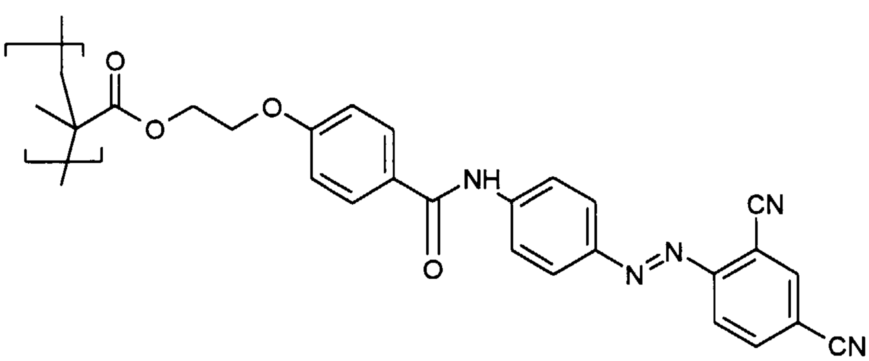

m Mol-%

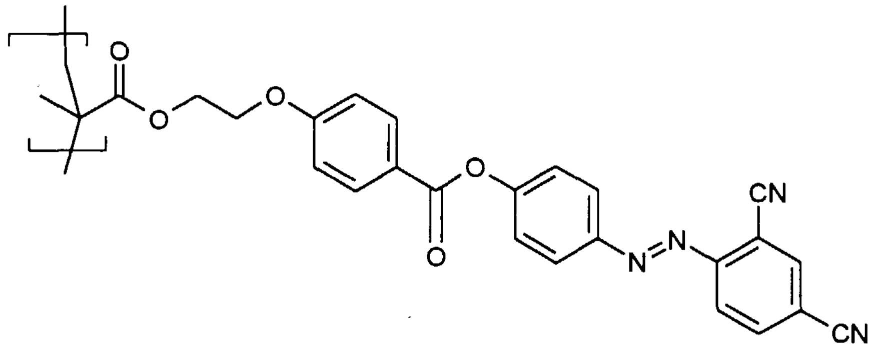

Formel 7

Analog Beispiel 1 wird ein Copolymerisat der Formel 7 hergestellt und entsprechend Beispiel 2 eine Probe gefertigt und gemessen. Man erhält eine Doppelbrechungsänderung $\Delta n$, eingeschrieben bei 488 nm wie folgt:

| Beispiel | $\nu_A$ | $\nu_P$ | $\Delta\nu_{P-A}$ | $\Delta n$ | m | n | mW/cm$^2$ | $\lambda$[nm] |
|---|---|---|---|---|---|---|---|---|
| 3.1 | 25 000 | 28 000 | 3 000 | 0,232 | 50 | 50 | 250 | 633 |

n Mol-%

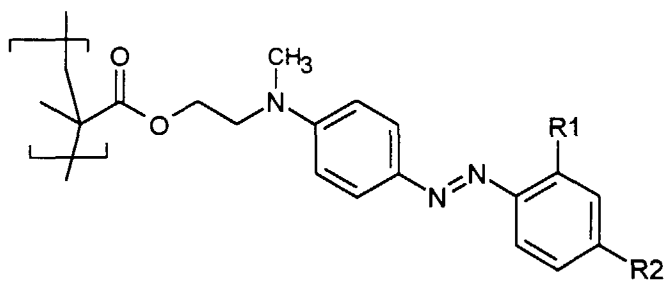

m Mol-%

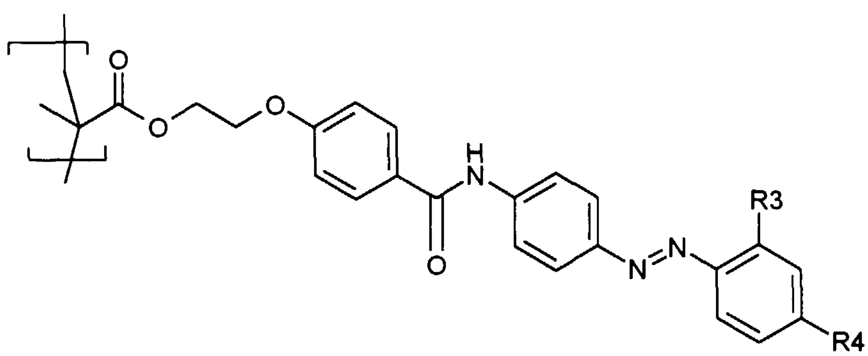

Formel 8

| Beispiel | $\nu_A$ | $\nu_P$ | $\Delta\nu_{P-A}$ | $\Delta n$ | m | n | mW/cm$^2$ | $\lambda$[nm] |
|---|---|---|---|---|---|---|---|---|
| $R^1 = R^2 = R^3 = R^4 = CN$ | | | | | | | | |
| 3.2 | 20 400 | 25 800 | 5 400 | 0,175 | 10 | 90 | 60 | 633 |
| 3.3 | 20 400 | 25 400 | 5 000 | 0,197 | 20 | 80 | 60 | 633 |
| 3.4 | 20 400 | 25 300 | 4 900 | 0,414 | 30 | 70 | 60 | 633 |
| 3.5 | 20 400 | 25 000 | 4 600 | 0,158 | 40 | 60 | 60 | 633 |
| $R^1 = R^3 = H$; $R^2 = R^4 = NO_2$ | | | | | | | | |
| 3.6 | 19.200 | 26.700 | 7.500 | 0,171 | 70 | 30 | 250 | 820 |
| 3.7 | 19.800 | 25.600 | 5.800 | 0,145 | 50 | 50 | 250 | 820 |
| 3.8 | 21.300 | 25.000 | 2.700 | 0,116 | 30 | 30 | 250 | 820 |

**Beispiel 4** $T^1 \neq T^2$; $Q^1=Q^2$, A=P

Analog Beispiel 1 wird ein Copolymerisat der Formel

n Mol-%

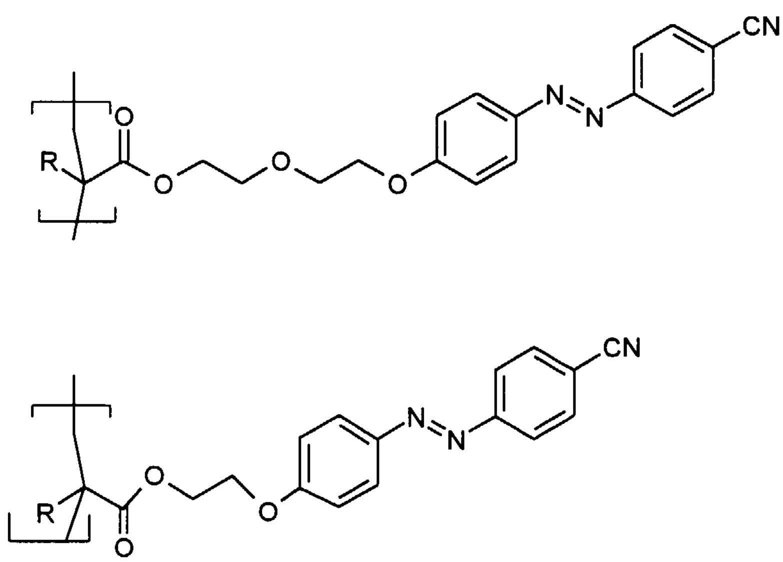

m Mol-%

Formel 9

hergestellt.

| Beispiel | $\nu_A$ | $\nu_P$ | $\Delta\nu_{P-A}$ | $\Delta n$ | m | n | mW/cm$^2$ | $\lambda$[nm] |
|---|---|---|---|---|---|---|---|---|
| R=$CH_3$ | | | | | | | | |
| 4.1 | 27 000 | 27 400 | 400 | 0,103 | 60 | 40 | 200 | 633 |
| R=H | | | | | | | | |
| 4.2 | 27 600 | 28 300 | 500 | 0,104 | 60 | 40 | 200 | 633 |

**Beispiel 5** $T^1=T^2$; $Q^1=Q^2$, $A \neq P$

m Mol-%

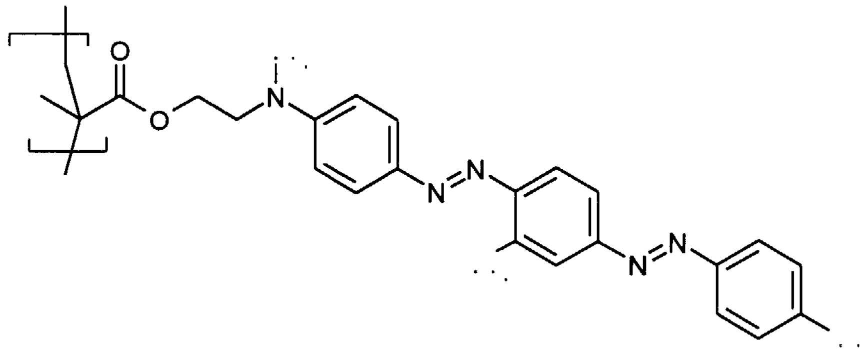

n Mol-%

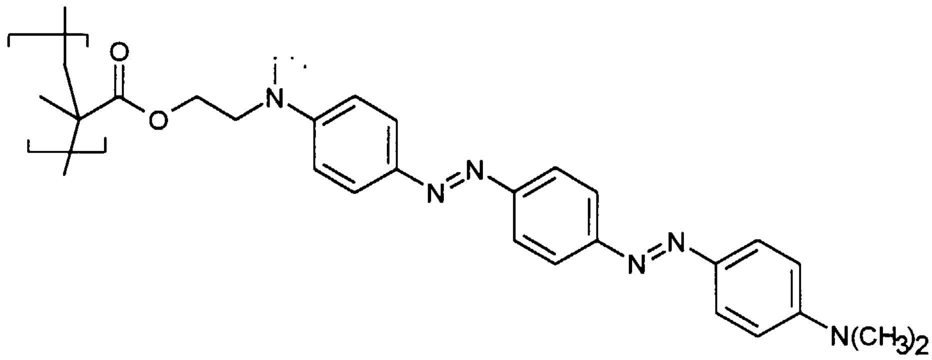

| Beispiel | $\nu_A$ | $\nu_P$ | $\Delta\nu_{P\text{-}A}$ | $\Delta n$ | m | n | mW/cm$^2$ | $\lambda$[nm] |
|---|---|---|---|---|---|---|---|---|
| 5.1 | 21 600 | 23 400 | 1 800 | 0,211 | 50 | 50 | 60 | 633 |

**Beispiel 6** Wärmefestigkeit

Glasplättchen der Größe 2 x 2 cm werden wie in Beispiel 1 beschrieben mit einem Polymer gemäß Beispiel 3.3 beschichtet und 11 Felder (flatfields) so eingeschrieben, daß eine Reihe ansteigender Transmission zwischen ca. 0 und 82 % mit ungefähr gleichem Abstand entsteht. Die Transmission wird unmittelbar nach dem Einschreiben bestimmt. Sie definiert den Ausgangszustand. Man läßt diese Probe 2 Monate bei Raumtemperatur ohne weiteren Schutz abgedunkelt liegen. Danach lagert man je ein weiteres dieser Plättchen 24 h bei 60°C, 80°C und 120°C in einem Trockenschrank und bestimmt die Transmission erneut. Man erhält so 4 Wertereihen, die mit dem Ausgangszustand verglichen werden. In der folgenden Tabelle 1 sind die Werte für die Transmission angegeben:

Tabelle 1

| Ausgangszustand | 2 Mt./20°C | 24 h/60°C | 24 h/80°C | 24 h/120°C |
|---|---|---|---|---|
| 82 | 75,4 | 68,9 | 83,6 | 72,2 |
| 73,8 | 67,2 | 65,6 | 75,4 | 68,9 |
| 65,6 | 60,7 | 59,0 | 64,0 | 54,1 |

Tabelle 1 (fortgesetzt)

| Ausgangszustand | 2 Mt./20°C | 24 h/60°C | 24 h/80°C | 24 h/120°C |
|---|---|---|---|---|
| 50,8 | 45,9 | 52,5 | 55,8 | 49,2 |
| 54,1 | 45,9 | 52,5 | 55,8 | 44,3 |
| 19,7 | 24,6 | 29,5 | 37,7 | 19,7 |
| 32,8 | 21,3 | 24,6 | 29,5 | 16,4 |
| 19,7 | 14,8 | 14,8 | 26,2 | 16,4 |
| 9,8 | 9,8 | 13,1 | 16,4 | 11,5 |
| 6,6 | 6,6 | 11,5 | 11,5 | 9,8 |
| 0 | 0 | 6,6 | 8,2 | 4,9 |

In der ersten Spalte sind die Werte für die frisch hergestellte Probe bei Raumtemperatur gemessen angegeben, in Spalte 2 ist die gleiche Messung nach 2 Monaten Lagerzeit wiederholt worden. Die übrigen Spalten entsprechen den Meßreihen nach Lagerung bei der in der ersten Zeile angegebenen Temperatur. Trägt man die Werte aus den Spalten 2 bis 5 gegen die in der Spalte 1 auf, so erhält man eine Gerade mit der Steigung 1. Die Graustufen verändern sich also nicht bei der Einwirkung erhöhter Temperatur.

**Patentansprüche**

**1.** Polymere, die an einer als Rückgrat wirkenden Hauptkette Seitenketten mindestens zweier unterschiedlicher Arten tragen, die beide elektromagnetische Strahlung, vorzugsweise mindestens für die eine Art der Wellenlänge des sichtbaren Lichts, absorbieren können mit der Maßgabe, daß die Absorptionsmaxima der unterschiedlichen Seitenketten mindestens 200 und maximal 10 000 $cm^{-1}$ voneinander entfert sind.

**2.** Polymere nach Anspruch 1 mit Seitengruppen der Formeln

$$-S^1-T^1-Q^1-A \qquad (I)$$

und

$$-S^2-T^2-Q^2-P \qquad (II),$$

worin

$S^1$, $S^2$ unabhängig voneinander Sauerstoff, Schwefel oder $NR^1$,

$R^1$ Wasserstoff oder $C_1$-$C_4$-Alkyl,

$T^1$, $T^2$ unabhängig voneinander den Rest $(CH_2)_n$, der gegebenenfalls durch -O-, $-NR^1-$ oder $-OSiR^1{}_2O-$ unterbrochen und/oder gegebenenfalls durch Methyl oder Ethyl substituiert sein kann,

n die Zahlen 2, 3 oder 4,

$Q^1$, $Q^2$ unabhängig voneinander einen zweibindigen Rest,

A, P unabhängig voneinander eine Einheit, die elektromagnetische Strahlung aufnehmen kann,

bedeuten.

**3.** Polymere nach Ansprüchen 1 und 2, wobei A und P den Formeln

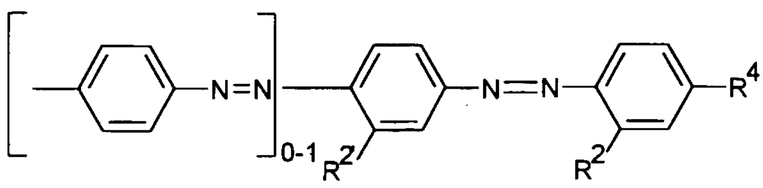

(X)

und

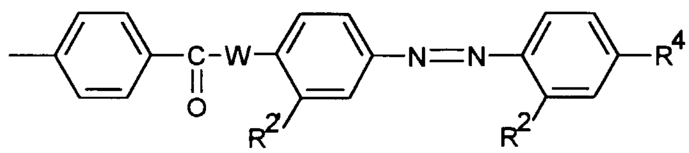

(XI)

entsprechen, worin

- $R^2$ Wasserstoff oder Cyano,
- $R^{2'}$ Wasserstoff oder Methyl,
- W Sauerstoff oder $NR^1$ und
- $R^4$ Nitro, Cyano, Benzamido, p-Chlor-, p-Cyano-, p-Nitrobenzamido oder Dimethylamino bedeuten.

**4.** Polymere nach Ansprüchen 1 bis 3, worin die Gruppen $-S^1-T^1-Q^1-$ bzw. $-S^2-T^2-Q^2-$ den Formel $-OCH_2CH_2O-$, $-OCH_2CH_2OCH_2CH_2O-$ und $-OCH_2CH_2-NR^1-$ entsprechen.

**5.** Polymere nach Ansprüchen 1 bis 4, worin die Hauptkette ein Poly(meth)acryloyl ist.

**6.** Polymere nach Ansprüchen 1 bis 5, in die mit polarisiertem Licht Doppelbrechungsänderungen Δn von über 0,15 eingeschrieben werden können.

**7.** Verfahren zur Herstellung von Polymeren nach Ansprüchen 1 bis 6, wonach man Monomere der Formeln

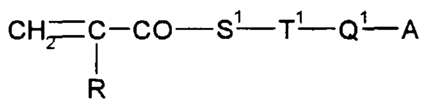

und

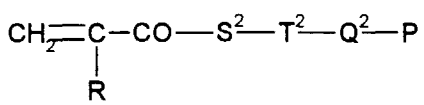

sowie

gegebenenfalls weitere Monomere miteinander copolymerisiert.

**8.** Filme aus Polymeren nach Ansprüchen 1 bis 6.

**9.** Mit Filmen nach Anspruch 8 beschichtete Träger.

**10.** Verwendung von Polymeren nach Ansprüchen 1 bis 6 zur Herstellung optischer Bauelemente.

Europäisches Patentamt

# EUROPÄISCHER RECHERCHENBERICHT

Nummer der Anmeldung
EP 98 10 0674

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 571 271 A (NIPPON TELEGRAPH AND TELEPHONE CORPORATION)<br>* das ganze Dokument *<br>--- | 1-10 | C08F8/00<br>C08F220/34<br>G11B7/24 |
| D,X | EP 0 704 513 A (BAYER AG)<br>* Seite 4, Zeile 7 - Zeile 54 *<br>* Seite 9, Zeile 32 - Zeile 37 *<br>* Seite 10, Zeile 17 - Zeile 20 *<br>* Seite 10, Zeile 48 - Zeile 54 *<br>* Seite 12, Zeile 3 - Zeile 17; Ansprüche 1-7 *<br>--- | 1-10 | |
| A | US 5 332 522 A (S. H. CHEN)<br>* Ansprüche 1-25 *<br>--- | 1 | |
| A | EP 0 538 773 A (RÖHM GMBH)<br>* Seite 8; Ansprüche 1,2 *<br>--- | 1,3 | |
| A | EP 0 535 490 A (BASF AG)<br>* Ansprüche 1-4 *<br>--- | 1 | |
| A | DE 42 44 197 A (BASF AG)<br>* das ganze Dokument *<br>--- | 1 | **RECHERCHIERTE SACHGEBIETE (Int.Cl.6)**<br>C08F<br>G11B |
| D,A | EP 0 260 687 A (BASF AG)<br>* Ansprüche 1-7 *<br>--- | 1 | |
| A | US 3 190 876 A (M. M. SKOULTCHI)<br>* das ganze Dokument *<br>----- | 3 | |

Der vorliegende Recherchenbericht wurde für alle Patentansprüche erstellt

| Recherchenort | Abschlußdatum der Recherche | Prüfer |
|---|---|---|
| DEN HAAG | 29.April 1998 | Permentier, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)